# EUROPEAN PATENT APPLICATION

(11) **EP 3 415 561 A1**
(43) Date of publication of application: **19.12.2018**
(21) Application number: 17176033.3
(22) Date of filing: 14.06.2017
(51) Int. Cl.: C08L 27/12, C08L 27/18

(54) **USE OF A FLUOROPOLYMER COMPOSITION IN A PROCESS FOR MANUFACTURING A SHAPED ARTICLE**

(71) Applicant: Solvay Specialty Polymers Italy S.p.A., 20021 Bollate (MI) (IT)
(72) Inventor: CARELLA, Serena, 20015 Parabiago (MI) (IT); MENNELLA, Amelia, 80059 Torre del Greco (NA) (IT); TREMOLADA, Giulio, 20811 Cesano Maderno (MB) (IT)
(74) Representative: Benvenuti, Federica

(57) **Abstract**

The present invention pertains to use of a fluoropolymer composition in a process for manufacturing a shaped article by rotational moulding.

## Description

### Technical Field

The present invention pertains to use of a fluoropolymer composition in a process for manufacturing a shaped article by rotational moulding.

### Background Art

Fluoropolymers have been extensively employed in several fields of use, thanks to their chemical resistance and thermal ageing resistance, very low small molecules permeation, and excellent corrosion resistance.

These features have favoured notably the use of these materials in coating and lining applications. Traditional means of applying coatings include rotational moulding such as rotomoulding and rotolining, which are especially suited for manufacturing large hollow articles in a heated rotating mold. In the case of rotomoulding, after cooling of the mold, the hollow article is removed from the mold. In the case of rotolining, the hollow article remains as a lining for the mold.

For instance, US 6287632 (DUPONT MITSUI FLUOROCHEMICAL) 11.09.2001 discloses a rotolining process which comprises placing a powder having an average particle size of 70-1000 µm containing a melt-processible fluoropolymer in a cylindrical article and forming a fluoropolymer lining having a thickness of at least 500 µm.

However, there is a tendency for substantial bubble formation in a rotolining process at temperatures higher than 300°C as the lining becomes thicker.

While efforts for improving properties of fluoropolymer compositions have been recorded in the art, there remains nevertheless a need in this field for fluoropolymer compositions delivering improved properties, including maintaining good corrosion resistance, good flame resistance with a high limiting oxygen index and a high thermal rating, while enhancing their processability, so as to be more adapted for use in moulding applications thereby delivering shaped articles with good surface properties.

### Summary of invention

It has been now found that by the process of the present invention it is possible to obtain shaped articles which are endowed with outstanding fire resistance properties, in combination with outstanding processability in rotational moulding applications, even at lower temperatures, while minimizing formation of bubbles contributing to surface roughness of the shaped articles.

In particular, it has been found that the fluoropolymer composition of the present invention is advantageously homogeneous and is thus particularly suitable for use in the process of the invention thereby providing shaped articles having outstanding surface smoothness, even at a thickness of 500 µm or higher.

The process of the present invention successfully enables obtaining shaped articles having a thickness of 500 µm or higher with a single processing step, while avoiding multiple processing steps to build up to the desired thickness.

Thus, in a first instance, the present invention pertains to a process for manufacturing a shaped article, said process comprising:
(i) providing a powder composition [composition (P)] comprising:
   - at least one semi-crystalline fluoropolymer comprising recurring units derived from ethylene (E) and at least one fluorinated monomer selected from the group consisting of chlorotrifluoroethylene (CTFE) and tetrafluoroethylene (TFE) [polymer (F)], and
   - Tin pyrophosphate (Sn₂P₂O₇), and
(ii) processing by rotational moulding the composition (P) provided in step (i).

The composition (P) advantageously shows good fire resistance with a Limiting Oxygen Index (LOI) which is at least 20% higher than the LOI of the polymer (F).

The Limiting Oxygen Index (LOI) of the composition (P) is determined according to ASTM D 2863.

The composition (P) comprises one or more than one polymers (F) as defined above.

The polymer (F) is advantageously in the form of a powder, said powder typically having an average particle size comprised between 100 µm and 600 µm, preferably between 300 µm and 500 µm.

The average particle size of the polymer (F) is determined according to ASTM D 1921-63.

The polymer (F) typically has a heat of fusion of at most 39 J/g, preferably of at most 35 J/g, more preferably of at most 25 J/g.

The heat of fusion of the polymer (F) is determined by Differential Scanning Calorimetry (DSC) at a heating rate of 10°C/min, according to ASTM D 3418.

The above detailed upper boundaries for the heat of fusion of polymer (F) are such to characterize the polymer (F) in relation to its low crystallinity, or in other words, the presence of a significant portion of amorphous phase, in addition to the crystalline phase.

Nevertheless, it is essential for the polymer (F) of being a semi-crystalline polymer, i.e. a polymer having a detectable melting point when determined according to ASTM D 3418.

Without lower limit for heat of fusion being critical, it is nevertheless understood that the polymer (F) typically has a heat of fusion of at least 1 J/g, preferably of at least 2 J/g, more preferably of at least 5 J/g.

The polymer (F) of the composition (P) typically comprises, preferably consists of:
(a) recurring units derived from ethylene (E) in an amount ranging from 30% to 50% by moles, preferably from 35% to 47% by moles, with respect to the total moles of recurring units in said polymer (F),
(b) recurring units derived from at least one fluorinated monomer selected from the group consisting of chlorotrifluoroethylene (CTFE) and tetrafluoroethylene (TFE) in an amount ranging from 40% to 70% by moles, preferably from 43% to 65% by moles, with respect to the total moles of recurring units in said polymer (F), and
(c) optionally, from 0.1 % to 10% by moles, preferably from 1% to 7% by moles, with respect to the total moles of recurring units in said polymer (F), of recurring units derived from one or more other fluorinated and/or hydrogenated comonomer(s).

Embodiments wherein the polymer (F) consists essentially of recurring units (a), (b) and, optionally, (c) are generally preferred.

End chain, defects and minor amounts of monomer impurities leading to recurring units different from those above mentioned (typically, <0.1% by moles, with respect to the total amount of recurring units) may be tolerated, without these substantially affecting the properties of the polymer (F).

When the polymer (F) comprises recurring units (c), the comonomer is generally a hydrogenated comonomer. More preferably, the hydrogenated comonomer is selected from the group consisting of (meth)acrylic monomers such as hydroxyalkylacrylate comonomers, for example hydroxyethylacrylate, hydroxypropylacrylate and (hydroxy)ethylhexylacrylate, and alkyl acrylate comonomers, for example n-butyl acrylate.

Alternatively, when the polymer (F) comprises recurring units (c), the comonomer is generally a fluorinated comonomer. More preferably, the fluorinated comonomer is selected from the group consisting of hexafluoroisobutylene (HFIB) and perfluoroalkylvinylethers such as perfluoropropylvinylether.

Among polymers (F), ECTFE polymers, i.e. polymers comprising recurring units derived from ethylene, CTFE and, optionally, a third comonomer, as defined above, are preferred.

ECTFE polymers suitable in the composition of the invention typically have a melting temperature not exceeding 242°C, preferably not exceeding 235°C, even not exceeding 230°C, more preferably not exceeding 227°C. The ECTFE polymer has a melting temperature of advantageously at least 150°C, preferably of at least 160°C, still preferably of at least 170°C, more preferably of at least 175°C, even more preferably of at least 180°C.

The melting temperature is determined by Differential Scanning Calorimetry (DSC) at a heating rate of 10°C/min, according to ASTM D 3418.

The polymer (F) is preferably a ECTFE polymer comprising, preferably consisting of:
(a) recurring units derived from ethylene (E) in an amount ranging from 30% to 50% by moles, preferably from 35% to 47% by moles, with respect to the total moles of recurring units in said polymer (F),
(b) recurring units derived from chlorotrifluoroethylene (CTFE) in an amount ranging from 40% to 70% by moles, preferably from 43% to 65% by moles, with respect to the total moles of recurring units in said polymer (F), and
(c) optionally, from 0.1 % to 10% by moles, preferably from 1% to 7% by moles, with respect to the total moles of recurring units in said polymer (F), of recurring units derived from one or more other fluorinated and/or hydrogenated comonomer(s).

The polymer (F) is more preferably a ECTFE polymer comprising, preferably consisting of:
(a) recurring units derived from ethylene (E) in an amount ranging from 30% to 50% by moles, preferably from 35% to 47% by moles, with respect to the total moles of recurring units in said polymer (F),
(b) recurring units derived from chlorotrifluoroethylene (CTFE) in an amount ranging from 40% to 70% by moles, preferably from 43% to 65% by moles, with respect to the total moles of recurring units in said polymer (F), and
(c) from 0.1 % to 10% by moles, preferably from 1% to 7% by moles, with respect to the total moles of recurring units in said polymer (F), of recurring units derived from one or more other fluorinated and/or hydrogenated comonomer(s), preferably from hexafluoroisobutylene (HFIB).

The melt flow rate of the ECTFE polymer, measured following the procedure of ASTM 3275-81 at 275°C and 2.16 Kg, ranges generally from 0.01 to 75 g/10 min, preferably from 0.1 to 50 g/10 min, more preferably from 0.5 to 30 g/10 min.

The composition (P) advantageously comprises the polymer (F) as major component; generally, the amount of at least one polymer (F) in the composition (P) is of from 80% to 99% by weight, preferably of from 90% to 97% by weight, with respect to the total weight of the composition (P).

The composition (P) advantageously comprises the polymer (F) as minor component; generally, the amount of Tin pyrophosphate (Sn₂P₂O₇ in the composition (P) is of from 0.5% to 10% by weight, preferably of from 2% to 6% by weight, with respect to the total weight of the composition (P).

Tin pyrophosphate (Sn₂P₂O₇ is present in the composition (P) typically in the form of a powder, said powder typically having an average particle size of less than 100 µm, preferably comprised between 1 µm and 50 µm, more preferably comprised between 1 µm and 20 µm.

The average particle size of the polymer (F) is determined according to ASTM D 1921-63.

The composition (P) may comprise, in addition to at least one polymer (F) and Tin pyrophosphate (Sn₂P₂O₇), at least one additional ingredient, including notably reinforcing fillers, stabilizers including UV stabilizers, and thermal stabilizers, lubricants, processing aids, mold release agents, and the like.

The composition (P) generally consists essentially of at least one polymer (F), Tin pyrophosphate (Sn₂P₂O₇), and, optionally, at least one additional ingredient such as those listed above.

The composition (P) preferably comprises, more preferably consists of:
- from 80% to 99% by weight, preferably from 90% to 97% by weight, with respect to the total weight of the composition (P), of at least one semi-crystalline fluoropolymer comprising recurring units derived from ethylene (E) and at least one fluorinated monomer selected from the group consisting of chlorotrifluoroethylene (CTFE) and tetrafluoroethylene (TFE) [polymer (F)],
- from 0.5% to 10% by weight, preferably from 2% to 6% by weight, with respect to the total weight of the composition (P), of Tin pyrophosphate (Sn₂P₂O₇), and
- optionally, from 0.1 % to 10% by weight, preferably from 0.2% to 5% by weight, with respect to the total weight of the composition (P), of at least one additional ingredient.

The composition (P) is processed by rotational moulding typically by:
- charging a pre-weighed amount of the composition (P) into a hollow mold, and
- placing the hollow mold into a heated oven and then rotating said hollow mold about the x-axis and y-axis.

The rotation of the mold is typically multiaxial so that the entire exposed inner surface of the hollow mold is coated with the composition (P).

The process of the invention is typically carried out at a rotational rate of from 0.5 rpm to 20 rpm, preferably of from 0.8 rpm to 4 rpm.

According to a first embodiment of the process of the invention, rotational moulding is carried out by rotomoulding, said process comprising:
- charging a pre-weighed amount of the composition (P) into a hollow mold,
- placing the hollow mold into a heated oven and then rotating said hollow mold about the x-axis and y-axis,
- heating the hollow mold while it is rotating so as to form a shaped article which fits the inner shape of said hollow mold,
- cooling the hollow mold and the shaped article so obtained, and
- after cooling, removing the shaped article from the hollow mold.

According to this first embodiment of the process of the invention, the surface of the hollow mold is typically treated with a release coating primer.

The release coating primer typically consists of polytetrafluoroethylene (PTFE).

According to this first embodiment of the process of the invention, a vent is typically installed in the hollow mold so as to allow air release during the heating step.

According to this first embodiment of the process of the invention, heating may be carried out in a one-stage heating cycle or in a two-stage heating cycle.

According to a second embodiment of the process of the invention, rotational moulding is carried out by rotolining, said process comprising:
- charging a pre-weighed amount of the composition (P) into a hollow mold,
- placing the hollow mold into a heated oven and then rotating said hollow mold about the x-axis and y-axis,
- heating the hollow mold while it is rotating so as to form a shaped article which fits the inner shape of said hollow mold, and
- cooling the hollow mold and the shaped article so obtained.

According to this second embodiment of the process of the invention, the surface of the hollow mold is typically a roughen surface which is typically treated by degreasing so as to remove oils and residues and then grit blast so as to remove rust.

According to this second embodiment of the process of the invention, a vent is typically installed in the hollow mold so as to allow air release during the heating step.

According to this second embodiment of the process of the invention, heating may be carried out in a one-stage heating cycle or in a two-stage heating cycle.

According to this second embodiment of the process of the invention, the shaped article so obtained is a lining for a hollow equipment, typically a lining coating the inner surface of said hollow equipment, wherein said hollow equipment is used as a hollow mold.

According to this second embodiment of the process of the invention, after processing of the composition (P) by rotolining, the shaped article so obtained is not removed from the hollow mold but the shaped article is advantageously in the form of a lining coating the inner surface of said hollow mold.

According to this embodiment of the process of the invention, the hollow mold is typically a hollow equipment such as a cylindrical hollow equipment.

Heating in the process of the invention is typically carried out at a temperature comprised between 240°C and 320°C.

The one-stage heating cycle is typically carried out at a temperature comprised between 250°C and 290°C.

The two-stage heating cycle is typically carried out in the first step at a temperature comprised between 280°C and 320°C and in the second step at a temperature comprised between 240°C and 270°C.

The composition (P) is particularly suitable for use in various rotomoulding devices such as clamshell machines, turret machines, shuttle machines, swing machines, and vertical wheel machines.

The hollow mold is typically made of aluminum and stainless steel.

The composition (P) is typically charged in the hollow mold in an amount depending on the surface area of the mold and the desired wall thickness.

The invention will be now described in more detail with reference to the following embodiments whose purpose is merely illustrative and not intended to limit the scope of the present invention.

### EXAMPLES

### Raw materials

HALAR^{®} 6012F ECTFE (average particle size: 400 µm).
Tin pyrophosphate (average particle size: 10 µm).
FIREBRAKE^{®} ZB metal filler containing Zinc oxide (37.7-38.7%) and Boric oxide (47.5% and 48.9%) (average particle size: 10 µm).
Calcium molybdate metal filler (average particle size: 10 µm).
Tin oxalate metal filler (average particle size: 10 µm).

### Example 1

A pipe 2" Hastelloy hollow mold was sandblasted with glass beads and an air hose cleaner was used to remove any glass grit. Then, a PTFE release agent was sprayed on the inner surface of the hollow mold. At this stage, 150 grams of a powder composition comprising 95% by weight of HALAR^{®} 6012F ECTFE and 5% by weight of Tin pyrophosphate was loaded in the mold.
A rotolining process was carried out using the equipment FSP Roto Flow M-20 under the following conditions:
- 52 minutes at 260°C,
- 5 minutes with lid closed air cool and recirculating fan,
- 15 minutes with lid open air cool and recirculating fan, and
- 5 minutes with lid open only.
Rotational conditions:
- main speed: 4.0 rpm reverse
- secondary speed: 1.0 rpm reverse
- hub speed: 0.8 rpm

### Comparative Example 1

The same conditions under Example 1 were followed but using a powder composition consisting of 100% by weight of HALAR^{®} 6012F ECTFE.

### Comparative Example 2

The same conditions under Example 1 were followed but using a powder composition comprising 95% by weight of HALAR^{®} 6012F ECTFE and 5% by weight of FIREBRAKE^{®} ZB metal filler.

### Comparative Example 3

The same conditions under Example 1 were followed but using a powder composition comprising 95% by weight of HALAR^{®} 6012F ECTFE and 5% by weight of Calcium molybdate metal filler.

### Comparative Example 4

The same conditions under Example 1 were followed but using a powder composition comprising 95% by weight of HALAR^{®} 6012F ECTFE and 5% by weight of Tin oxalate metal filler.

### Determination of the Cone Calorimeter

The heat release rate peek has been determined according to ASTM E 1354.

The results are set forth in Table 1 here below:

**Table 1**

| **Run** | **Surface aspect** | **LOI [%]** | **Heat Release Rate Peek [KW/m2]** |
|---|---|---|---|
| **Example 1** | smooth | 68.8 | 44 |
| **C. Example 1** | smooth | 54.9 | 376 |
| **C. Example 2** | rough | 68.9 | 36 |
| **C. Example 3** | rough | - | - |
| **C. Example 4** | rough | - | - |

As shown in Table 1 here above, it has been found that the lining obtained by processing by rotational moulding a powder composition according to the invention as notably represented by the powder composition of Example 1 advantageously exhibits outstanding surface smoothness in combination with outstanding fire resistance properties.

In particular, the lining obtained by processing by rotational moulding a powder composition according to the invention as notably represented by the powder composition of Example 1 surprisingly exhibits outstanding surface smoothness, even at a thickness of 3 mm, as compared to the linings obtained by processing by rotational moulding the composition according to any of Comparative Examples 2 to 4.

Also, the lining obtained by processing by rotational moulding a powder composition according to the invention as notably represented by the powder composition of Example 1 surprisingly exhibits higher values of LOI and lower values of heat release rate peek as compared to the lining obtained by processing by rotational moulding the composition according to Comparative Example 1.

## Claims

1. A process for manufacturing a shaped article, said process comprising:
(i) providing a powder composition [composition (P)] comprising:
- at least one semi-crystalline fluoropolymer comprising recurring units derived from ethylene (E) and at least one fluorinated monomer selected from the group consisting of chlorotrifluoroethylene (CTFE) and tetrafluoroethylene (TFE) [polymer (F)], and
- Tin pyrophosphate (Sn₂P₂O₇), and
(ii) processing by rotational moulding the composition (P) provided in step (i).

2. The process for manufacturing a shaped article according to claim 1, wherein the polymer (F) comprises, preferably consists of:
(a) recurring units derived from ethylene (E) in an amount ranging from 30% to 50% by moles, preferably from 35% to 47% by moles, with respect to the total moles of recurring units in said polymer (F),
(b) recurring units derived from at least one fluorinated monomer selected from the group consisting of chlorotrifluoroethylene (CTFE) and tetrafluoroethylene (TFE) in an amount ranging from 40% to 70% by moles, preferably from 43% to 65% by moles, with respect to the total moles of recurring units in said polymer (F), and
(c) optionally, from 0.1 % to 10% by moles, preferably from 1% to 7% by moles, with respect to the total moles of recurring units in said polymer (F), of recurring units derived from one or more other fluorinated and/or hydrogenated comonomer(s).

3. The process for manufacturing a shaped article according to claim 1 or 2, wherein the polymer (F) is a ECTFE polymer comprising, preferably consisting of:
(a) recurring units derived from ethylene (E) in an amount ranging from 30% to 50% by moles, preferably from 35% to 47% by moles, with respect to the total moles of recurring units in said polymer (F),
(b) recurring units derived from chlorotrifluoroethylene (CTFE) in an amount ranging from 40% to 70% by moles, preferably from 43% to 65% by moles, with respect to the total moles of recurring units in said polymer (F), and
(c) optionally, from 0.1 % to 10% by moles, preferably from 1% to 7% by moles, with respect to the total moles of recurring units in said polymer (F), of recurring units derived from one or more other fluorinated and/or hydrogenated comonomer(s).

4. The process for manufacturing a shaped article according to any one of claims 1 to 3, wherein Tin pyrophosphate (Sn₂P₂O₇ is present in the composition (P) in the form of a powder, said powder typically having an average particle size of less than 100 µm, preferably comprised between 1 µm and 50 µm, more preferably comprised between 1 µm and 20 µm.

5. The process for manufacturing a shaped article according to any one of claims 1 to 4, wherein the composition (P) comprises, preferably consists of:
- from 80% to 99% by weight, preferably from 90% to 97% by weight, with respect to the total weight of the composition (P), of at least one semi-crystalline fluoropolymer comprising recurring units derived from ethylene (E) and at least one fluorinated monomer selected from the group consisting of chlorotrifluoroethylene (CTFE) and tetrafluoroethylene (TFE) [polymer (F)],
- from 0.5% to 10% by weight, preferably from 2% to 6% by weight, with respect to the total weight of the composition (P), of Tin pyrophosphate (Sn₂P₂ O₇), and
- optionally, from 0.1% to 10% by weight, preferably from 0.2% to 5% by weight, with respect to the total weight of the composition (P), of at least one additional ingredient.

6. The process for manufacturing a shaped article according to any one of claims 1 to 5, wherein the composition (P) is processed by rotational moulding by:
- charging a pre-weighed amount of the composition (P) into a hollow mold, and
- placing the hollow mold into a heated oven and then rotating said hollow mold about the x-axis and y-axis.

7. The process for manufacturing a shaped article according to any one of claims 1 to 6, said process being carried out at a rotational rate of from 0.5 rpm to 20 rpm, preferably of from 0.8 rpm to 4 rpm.

8. The process for manufacturing a shaped article according to any one of claims 1 to 7, wherein rotational moulding is carried out by rotomoulding, said process comprising:
- charging a pre-weighed amount of the composition (P) into a hollow mold,
- placing the hollow mold into a heated oven and then rotating said hollow mold about the x-axis and y-axis,
- heating the hollow mold while it is rotating so as to form a shaped article which fits the inner shape of said hollow mold,
- cooling the hollow mold and the shaped article so obtained, and
- after cooling, removing the shaped article from the hollow mold.

9. The process for manufacturing a shaped article according to claim 8, wherein the surface of the hollow mold is treated with a release coating primer.

10. The process for manufacturing a shaped article according to any one of claims 1 to 7, wherein rotational moulding is carried out by rotolining, said process comprising:
- charging a pre-weighed amount of the composition (P) into a hollow mold,
- placing the hollow mold into a heated oven and then rotating said hollow mold about the x-axis and y-axis,
- heating the hollow mold while it is rotating so as to form a shaped article which fits the inner shape of said hollow mold, and
- cooling the hollow mold and the shaped article so obtained.

11. The process for manufacturing a shaped article according to claim 10, wherein the shaped article is in the form of a lining coating the inner surface of the hollow mold.

12. The process for manufacturing a shaped article according to claim 10 or 11, wherein the hollow mold is a hollow equipment such as a cylindrical hollow equipment.
